# FASCICULE DE BREVET EUROPEEN

(11) **EP 2 054 200 B1**
(45) Date de publication et mention de la délivrance du brevet: **03.11.2010**
(21) Numéro de dépôt: 07823436.6
(22) Date de dépôt: 22.08.2007
(51) Int. Cl.: B26D 5/00

(54) **OUTIL AVEC DISPOSITIF D'ASSISTANCE À L'ACTIONNEMENT**
WERKZEUG MIT HILFSVORRICHTUNG ZUR BETÄTIGUNG
TOOL WITH DEVICE FOR ASSISTING ITS ACTUATION

(30) Priorité: 22.08.2006 FR 0607446
(43) Date de publication de la demande: 06.05.2009
(73) Titulaire: Robotiques 3 Dimensions Sarl (RB 3D), 89000 Auxerre (FR)
(72) Inventeur: GRYGOROWICZ, Serge, 89580 GY L'Eveque (FR)
(74) Mandataire: Novagraaf Technologies
(86) Numéro de dépôt international: PCT/FR2007/001388
(87) Numéro de publication internationale: WO 2008/023117

(56) Documents cités:
- DE-A1- 2 635 197

## Description

L'invention concerne un outil comprenant deux bras mobiles en rotation autour d'un axe en combinaison avec dispositif d'assistance à l'actionnement dudit outil.

L'invention s'applique à tout type d'outils tels que définis ci-dessus. Ces outils sont par exemple de type pinces, sécateurs ou analogues.

De tels outils sont actionnés par le rapprochement des bras l'un vers l'autre. À cet effet, les bras sont mobiles en rotation entre une position d'ouverture, dans laquelle les bras sont éloignés l'un de l'autre, et une position de fermeture, dans laquelle les bras sont rapprochés l'un de l'autre.

Les efforts exercés par l'outil (effort de coupe, de serrage par exemple) sont directement proportionnels aux efforts exercés par l'utilisateur sur les bras lors du passage de la position d'ouverture à la position de fermeture.

Les efforts imposés à l'utilisateur sont donc parfois importants et peuvent entraîner une fatigue ou des douleurs, si l'outil est utilisé fréquemment ou pour des opérations demandant un effort particulier.

L'invention vise à pallier ces inconvénients en proposant un dispositif d'assistance à l'actionnement d'un tel outil permettant de réduire, voire de supprimer, les efforts demandés à un utilisateur pour actionner l'outil est définie dans la revendication 1.

À cet effet, l'invention est définie dans la revendication 1.

Selon un exemple de réalisation, le tendeur est un enrouleur.

Ainsi, les efforts d'actionnement de l'outil sont assurés, au moins en partie, par l'enroulement du câble dans l'enrouleur sans que l'utilisateur n'ait à effectuer d'efforts importants de serrage autour des bras pour les faire passer en position de fermeture.

Selon une variante, le tendeur est constitué d'un mécanisme vis-écrou.

Cette solution est avantageuse car le mécanisme vis-écrou permet de s'affranchir de l'utilisation d'un réducteur relié aux moyens d'actionnement. En effet, le mécanisme vis-écrou intègre d'ores et déjà une réduction. Les moyens d'actionnement sont donc directement reliés au mécanisme vis-écrou, ce qui induit un gain de place important sur le dispositif.

De préférence, les moyens d'actionnement du tendeur sont désolidarisés de l'outil.

Le terme désolidarisé signifie que, même si les moyens d'actionnements sont reliés mécaniquement au dispositif d'assistance fixé sur l'outil, ils ne sont pour autant pas solidaires de cet outil. Cette disposition permet de déporter les moyens d'actionnement et les batteries, qui représentent une charge pour l'utilisateur, dans une boîte séparée qui peut être posée sur une table ou bien portée à la ceinture. Ainsi, l'utilisateur n'a pas à supporter le poids des moyens d'actionnement et de la batterie à bout de bras.

Avantageusement, les moyens d'actionnement transmettent l'effort de tension au tendeur par l'intermédiaire d'un lien flexible.

L'utilisation d'un lien flexible permet de transmettre un mouvement de rotation entre deux éléments libres l'un par rapport à l'autre.

De préférence, le lien flexible est intégré dans une gaine de protection externe qui comprend également au moins un câble électrique reliant les moyens d'actionnement au reste du dispositif.

Le câble électrique permet de transmettre les signaux de commande et de capteurs aux moyens d'actionnement.

Selon une réalisation, les moyens d'actionnement comprennent un moteur électrique.

Selon une réalisation, le dispositif comprend un capteur d'effort de l'actionnement des bras par un utilisateur, ledit capteur étant couplé aux moyens d'actionnement de sorte que l'effort d'enroulement du câble soit proportionnel à l'effort d'actionnement des bras par l'utilisateur.

Ainsi, l'utilisateur garde la sensation d'efforts à effectuer pour actionner l'outil, bien que ces efforts soient considérablement réduits. Il est important que cette sensation soit préservée afin d'éviter des manoeuvres malencontreuses de l'outil (serrage trop important ou coupe d'un objet non désirée par exemple). On peut prévoir des moyens de réglage des efforts pris en charge par le dispositif. L'utilisateur peut alors choisir quelle part d'effort il souhaite conserver dans l'actionnement de l'outil.

Le dispositif comprend un compteur de cycles d'utilisation de l'outil, ledit compteur étant agencé pour compter le nombre de passages de la position d'ouverture à la position de fermeture et/ou inversement.

Ainsi, le dispositif permet d'obtenir une information sur la durée de vie de l'outil, ce qui peut être particulièrement utile dans le cas d'une utilisation répétée (en usine par exemple) de cet outil.

L'invention sera bien comprise à la lecture de la description qui suit, faite en référence aux figures annexées.
- La figure 1 est une représentation schématique en perspective du dispositif d'assistance selon l'invention dans lequel le tendeur est un enrouleur, ledit dispositif comprenant un enrouleur et étant associé à une pince de sertissage.
- Les figures 2a et 2b sont des représentations schématiques montrant le fonctionnement du dispositif d'assistance associé à deux bras mobiles en rotation autour d'un axe, en position d'ouverture et en position de fermeture.
- Les figures 3a, 3b, 3c sont des représentations schématiques d'un exemple de réalisation d'un dispositif d'assistance selon l'invention dans lequel les moyens d'actionnement sont désolidarisés du dispositif.
- La figure 4 est une représentation schématique d'un autre exemple de réalisation d'un dispositif d'assistance selon l'invention dans lequel le tendeur comporte un mécanisme de vis-écrou, ledit dispositif étant associé à une pince à deux branches.

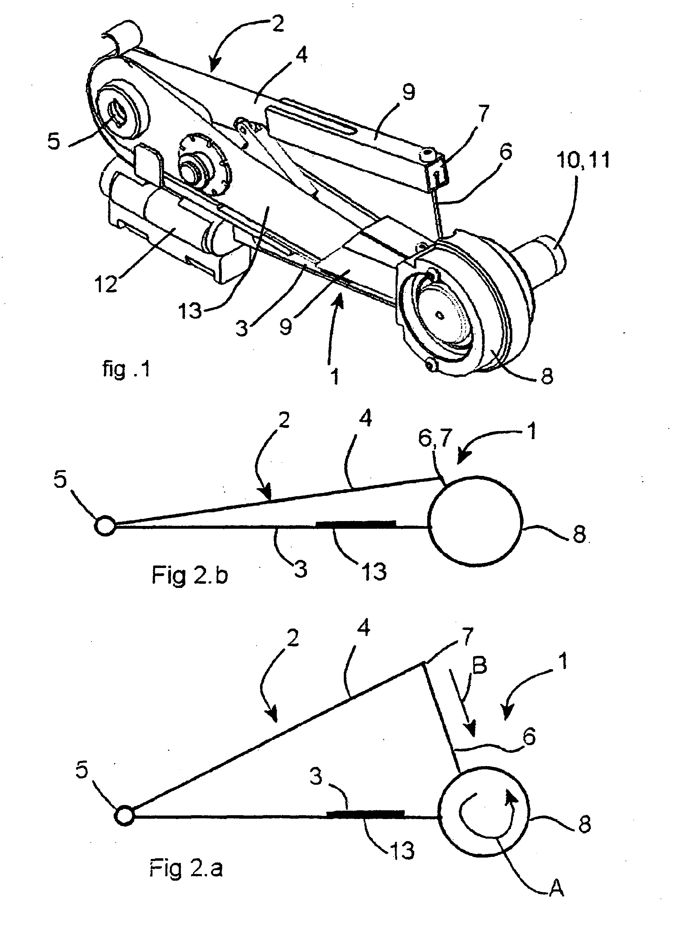

En référence aux figures 1, 2a et 2b, on décrit un dispositif d'assistance 1 à l'actionnement d'un outil 2 comprenant deux bras 3 et 4 mobiles en rotation autour d'un axe 5. Les bras 3 et 4 sont mobiles entre une position d'ouverture, dans laquelle les bras sont éloignés l'un de l'autre comme représenté sur la figure 2a, et une position de fermeture, dans laquelle les bras sont rapprochés l'un de l'autre comme représenté sur la figure 2b.

Dans l'exemple de réalisation représenté sur la figure 1, l'outil 2 est une pince de sertissage. Cependant, on peut envisager d'autres types d'outils comprenant deux bras mobiles l'un par rapport à l'autre en rotation autour d'un axe, tels que des pinces ou des sécateurs par exemple.

Selon un premier mode de réalisation, le dispositif d'assistance 1 comprend un câble 6 dont une partie extrême 7 est associée à l'un des bras 4. L'autre partie extrême du câble 6 est disposée dans un tendeur de câble, sous forme d'un enrouleur 8, associé à l'autre bras 3. Ainsi, le câble 6 est tendu entre les bras 3 et 4 en position d'ouverture des bras, comme représenté sur la figure 2a, et est enroulé autour de l'enrouleur 8, en position de fermeture des bras comme représenté sur la figure 2b.

La partie extrême libre 7 du câble 6 et l'enrouleur 8 sont par exemple associés chacun à une gaine 9. Chaque gaine 9 s'emmanche autour d'un des bras 3 et 4, comme représenté sur la figure 1. Tous les éléments du dispositif d'assistance 1 peuvent être associés à ces gaines 9, de sorte que le dispositif 1 forme un ensemble indépendant de l'outil 2. Ainsi le dispositif d'assistance 1 peut être associé à un outil puis dissocié de celui-ci afin d'être associé à un autre outil par exemple.

L'enrouleur 8 permet de faire passer les bras 3 et 4 de leur position d'ouverture à leur position de fermeture en enroulant le câble 6 (flèche A de la figure 2a), ce qui a pour effet de tirer le bras 4 vers le bras 3 (flèche B de la figure 2a). À cet effet, le dispositif 1 comprend des moyens d'actionnement 10 de l'enrouleur 8.

Selon une réalisation, les moyens d'actionnement comprennent un moteur électrique 11 agencé pour actionner l'enrouleur 8 en rotation de sorte à enrouler lé câble 6. Le moteur peut être de tout type. Il peut par exemple s'agir d'un moteur piézo-électrique ou autre. Comme représenté sur la figure 1, le moteur 11 peut être alimenté en courant par une source de courant 12, telle qu'une pile. Les moyens d'actionnement 10 sont réversibles, c'est-à-dire qu'ils permettent d'actionner l'enrouleur en enroulement ainsi qu'en déroulement.

La partie extrême libre 7 du câble 6 et l'enrouleur 8 sont associés aux bras 3 et 4 au niveau de la partie extrême libre de ceux-ci, c'est-à-dire dans la position la plus éloignée de l'axe de rotation 5. Une telle réalisation permet de limiter le couple nécessaire pour faire passer l'outil de la position d'ouverture à la position de fermeture. L'enrouleur 8 est donc moins sollicité et on peut réduire la puissance du moteur 11. Selon une autre réalisation, l'enrouleur peut être disposé à un autre endroit que la partie extrême du bras. Ainsi on peut prévoir un système de renvoi du câble à l'extrémité du bras auquel est associé l'enrouleur, par exemple une poulie permettant de disposer l'enrouleur à un autre endroit du bras tout en faisant passer le câble par cette extrémité.

Le dispositif 1 peut comprendre un capteur d'effort 13 de l'actionnement des bras 3 et 4 par un utilisateur. Le capteur est par exemple associé à la gaine 9 à laquelle est fixée la partie extrême 7 du câble 6 ou à l'autre gaine 9 et est disposé à un endroit où l'utilisateur saisit l'outil 2 pour l'actionner, par exemple là où l'utilisateur place la paume de sa main. Le capteur d'effort 13 est par exemple une jauge d'extensiométrie fixée sur une lame en contact avec la paume de la main. Le capteur 13 est couplé aux moyens d'actionnement 10 de sorte que l'effort d'enroulement du câble 6 soit proportionnel à l'effort d'actionnement des bras 3 et 4 par l'utilisateur.

Selon une réalisation, le capteur 13 est également utilisé pour déclencher les moyens d'actionnement 10. Ainsi, on peut prévoir que les moyens d'actionnement 10 actionnent l'enrouleur 8 lorsque l'effort détecté par le capteur d'effort 13 est supérieur à un seuil prédéfini. Ainsi, il n'est pas nécessaire de prévoir un système de départ de mouvement des moyens d'actionnement 10.

Le dispositif 1 peut comprendre des moyens de réglage des efforts pris en charge par le dispositif pour permettre à l'utilisateur de choisir la quantité d'effort qu'il aura à fournir pour actionner son outil. Par exemple, l'utilisateur peut régler le dispositif pour qu'il prenne en charge sensiblement 4/5 ou la moitié des efforts permettant le passage de la position d'ouverture à la position de fermeture. Les efforts restants sont à la charge de l'utilisateur lorsqu'il actionne les bras 3 et 4 de l'outil 2. Ainsi, l'utilisateur conserve la sensation d'un effort pour faire passer l'outil de la position d'ouverture à la position de fermeture. Cette sensation est particulièrement importante pour l'utilisateur qui peut ainsi se rendre compte d'une mauvaise manoeuvre de l'outil. Par exemple, si l'outil est un sécateur et qu'une tige métallique se trouve sur le trajet de coupe, l'utilisateur pourra se rendre compte de cette présence par l'augmentation de l'effort qu'il aura à fournir pour fermer le sécateur.

Le dispositif 1 peut comprendre un compteur de cycles d'utilisation de l'outil (non représenté). Ce compteur est agencé pour compter le nombre de passages de la position d'ouverture à la position de fermeture et/ou inversement. Un tel compteur permet ainsi d'obtenir des informations sur la durée de vie de l'outil, ce qui peut être particulièrement utile en cas d'utilisation répétée de l'outil.

Les moyens d'actionnement 10 peuvent être agencés pour entraîner l'enrouleur 8 jusqu'à la position de fermeture lorsque le passage de la position d'ouverture à la position de fermeture a été enclenché et pour empêcher le retour vers la position d'ouverture tant que la position de fermeture n'a pas été atteinte. À cet effet, le dispositif peut comprendre des capteurs de la position d'ouverture et de la position de fermeture (non représentés).

Pour les outils présentant différents niveaux d'actionnements, plusieurs calibres de réglage par exemple, on peut prévoir des moyens de sélection de profils d'efforts appliqués par l'enrouleur 8 sur le câble 6. Ainsi, on peut adapter l'effort appliqué par l'enrouleur 8 au calibre de l'outil. Le dispositif 1 peut alors comprendre des moyens de stockage d'informations dans lesquels sont enregistrés lesdits profils d'efforts. L'utilisateur peut alors sélectionner un profil en fonction du calibre de l'outil.

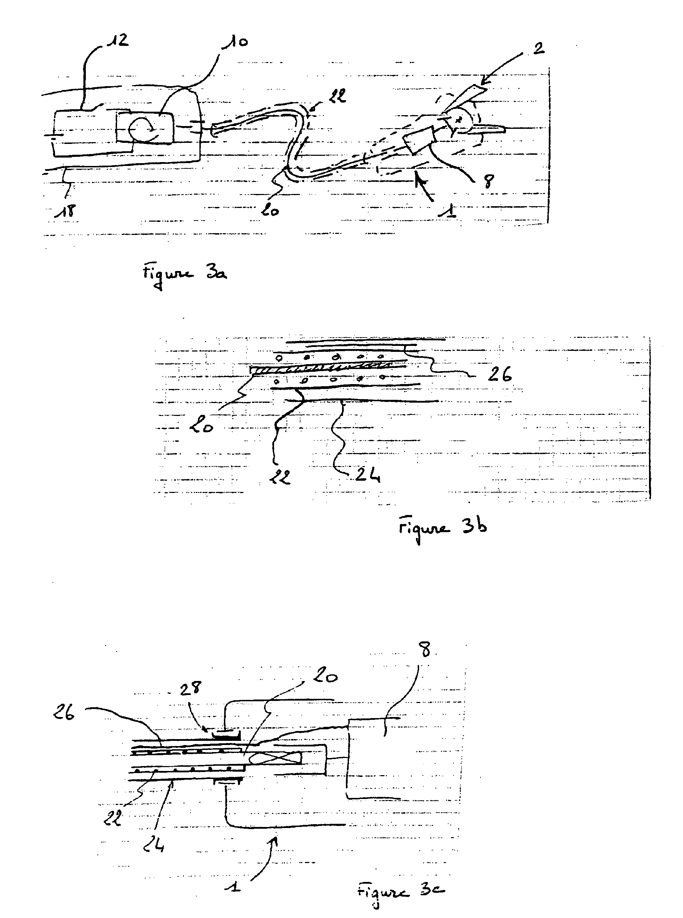

Une variante de réalisation du dispositif d'assistance selon l'invention est représentée sur la figure 3. Dans cette variante, les moyens d'actionnement 10, ainsi que la source de courant 12 sont désolidarisés de l'outil 2 et placés dans un boîtier 18. Ainsi, le boîtier 18 peut être déposé sur une table de travail ou accroché à la ceinture, à distance du dispositif d'assistance.

Le mouvement de rotation est alors transmis par un lien flexible 20 de section circulaire disposé entre les moyens d'actionnement 10 et le tendeur 8. L'effort est ainsi transmis par l'intermédiaire d'un méplat.

Selon un mode de réalisation, les moyens d'actionnement 10 comprennent un motoréducteur, également placé dans le boîtier 18. De façon alternative, le réducteur peut être placé sur l'outil 2 et couplé avec le lien flexible 20.

Le lien flexible 20 est recouvert d'une gaine de protection interne 22 spiralée. La spirale sert à rigidifier l'ensemble lien flexible 20 et gaine de protection interne 22, de façon à éviter que le lien flexible 20 ne puisse être abîmé.

La gaine de protection interne 22 spiralée et le lien flexible 20 sont compris dans une gaine de protection externe 24 qui intègre en outre un câble électrique 26. Le câble électrique 26 permet de relier les moyens d'actionnement 10 avec le reste du dispositif d'assistance 10. Les signaux de commande ou de capteurs du dispositif sont acheminés jusqu'aux moyens d'actionnement 10 par l'intermédiaire de ce câble électrique 26.

Avantageusement, la gaine de protection externe 24 est libre en rotation par rapport au boîtier 18 et au dispositif d'assistance 1. Selon une réalisation, la liaison pivot est réalisée au moyen d'une bague sertie 28 sur la gaine de protection externe 24.

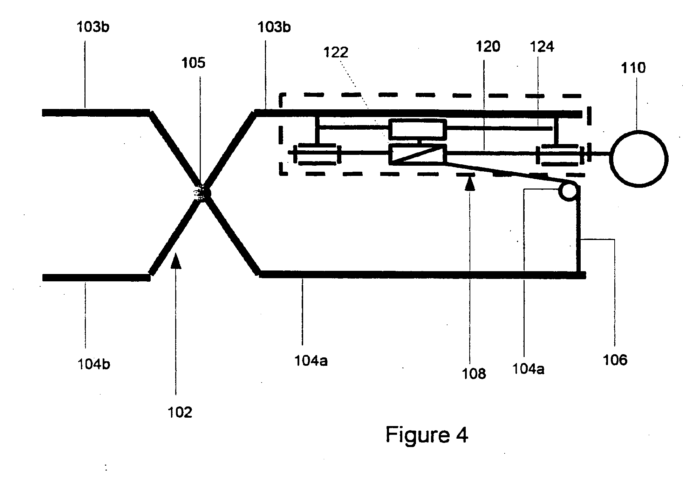

Un autre exemple de réalisation du dispositif d'assistance selon l'invention est représenté sur la figure 4. Dans cet exemple, l'outil 102 est une pince de préhension qui possède également deux bras 103a,104a mobiles en rotation autour d'un axe 105 ainsi que deux branches de préhension 103b,104b respectivement dans le prolongement des bras 1 03a, 1 04a.

Lorsque les bras 103a,104a sont en position d'ouverture, les branches de préhension 103b,104b sont ouvertes. De la même façon, lorsque les bras 103a,104a sont en position de fermeture, les branches de préhension 103b,104b sont fermées.

Le dispositif d'assistance 100 comporte également un câble flexible 106 dont une partie extrême est associée à l'un des bras 104a. L'autre partie extrême du câble flexible 106 est disposée dans un tendeur, associé au bras 103a, qui permet d'actionner l'ouverture ou la fermeture de l'outil 102.

Avantageusement, le câble flexible 106 passe par une poulie 109. Ainsi, la direction de la force imposée par le câble flexible 106 sur le bras 104a est sensiblement perpendiculaire au bras 104a.

Dans cet exemple de réalisation, le tendeur est constitué d'un mécanisme vis-écrou 108. Une tige filetée 120 est en liaison pivot par rapport au bras 103a. Un écrou 122 est en liaison hélicoïdale par rapport à la tige filetée 120 et en liaison glissière par rapport à un axe 124 fixe par rapport au bras 103a.

Ainsi, lorsque la tige filetée 120 entre en rotation, l'écrou 122 se déplace le long de la tige filetée de façon à tendre ou détendre le câble flexible 106, selon le sens de rotation de la tige filetée. Lorsque le câble flexible 106 se tend, les bras 103a et 103b se rapprochent et referment l'outil 102. Inversement, lorsque le câble flexible 106 se détend les bras 103a et 103b s'éloignent et l'outil 102 s'ouvre.

Les moyens d'actionnement 110 du tendeur 8,108 sont constitués d'un moteur électrique 111 qui entraîne la tige filetée 120 en rotation actionnant ainsi l'ouverture ou la fermeture de la pince de préhension 102.

## Revendications

1. Outil muni d'un dispositif d'assistance à l'actionnement dudit outil (2), l'outil (2) comprenant deux bras (3, 4,103a,104a) mobiles en rotation autour d'un axe (5,105) entre une position d'ouverture, dans laquelle les bras (3, 4,103a,104a) sont éloignés l'un de l'autre, et une position de fermeture, dans laquelle les bras (3, 4,103a,104a) sont rapprochés l'un de l'autre, ledit dispositif comprenant un câble (6,106) dont une partie extrême (7) est associée à l'un desdits bras (4,104a), l'autre partie extrême dudit câble étant disposée dans un tendeur (8,108) de câble, ledit tendeur (8,108) étant associé à l'autre bras (3), ledit dispositif comprenant des moyens d'actionnement (10,110) du tendeur (8,108) entre une position d'ouverture dans laquelle le câble (6,106) est détendu, les bras (3, 4,103a,104a) étant en position d'ouverture, et une position de fermeture, dans laquelle le câble (6,106) est tendu de sorte à faire passer les bras (3, 4,103a,104a) dans leur position de fermeture.

2. Outil selon la revendication 1, **caractérisé en ce que** le tendeur est un enrouleur (8).

3. Outil selon la revendication 1, **caractérisé en ce que** le tendeur est constitué d'un mécanisme vis-écrou (108).

4. Outil selon l'une des revendications précédentes **caractérisé en ce que** les moyens d'actionnement (10,110) du tendeur (8,108) sont désolidarisés de l'outil (2).

5. Outil selon la revendication 4 **caractérisé en ce que** les moyens d'actionnement (10,110) transmettent l'effort de tension au tendeur (8,108) par l'intermédiaire d'un lien flexible (20).

6. Outil selon la revendication 5 **caractérisé en ce que** le lien flexible (20) est intégré dans une gaine de protection externe (24) qui comprend également au moins un câble électrique (26) reliant les moyens d'actionnement (10,110) au reste du dispositif d'assistance.

7. Outil selon l'une des revendications précédentes, **caractérisé en ce que** les moyens d'actionnement (10,110) du tendeur (8,108) sont agencés pour se déclencher lorsque les bras (3, 4,103a,104a) sont actionnés par un utilisateur.

8. Outil selon l'une des revendications précédentes, **caractérisé en ce que** les moyens d'actionnement (10,110) comprennent un moteur électrique (11).

9. Outil selon l'une des revendications précédentes, **caractérisé en ce que** le câble (6,106) et le tendeur (8,108) sont associés aux bras (3, 4,103a,104a) au niveau d'une partie extrême de ceux-ci.

10. Outil selon l'une des revendications précédentes, **caractérisé en ce qu'**il comprend un capteur d'effort (13) de l'actionnement des bras (3, 4,103a,104a) par un utilisateur, ledit capteur étant couplé aux moyens d'actionnement (10,110) de sorte que l'effort de tension du câble (6,106) soit proportionnel à l'effort d'actionnement des bras (3, 4,103a,104a) par l'utilisateur.

11. Outil selon la revendication 10, **caractérisé en ce que** les moyens d'actionnement (10,110) sont agencés pour actionner le tendeur (8,108) lorsque l'effort détecté par le capteur d'effort (13) est supérieur à un seuil prédéfini.

12. Outil selon l'une des revendications précédentes, **caractérisé en ce qu'**il comprend des moyens de réglage des efforts pris en charge par le dispositif pour permettre le passage de la position d'ouverture à la position de fermeture.

13. Outil selon l'une des revendications précédentes, **caractérisé en ce qu'**il comprend un compteur de cycles d'utilisation de l'outil (2), ledit compteur étant agencé pour compter le nombre de passages de la position d'ouverture à la position de fermeture et/ou inversement.

14. Outil selon l'une des revendications précédentes, **caractérisé en ce que** les moyens d'actionnement (10,110) sont agencés pour entraîner le tendeur (8,108) jusqu'à la position de fermeture lorsque le passage de la position d'ouverture à la position de fermeture a été enclenché et pour empêcher le retour vers la position d'ouverture tant que la position de fermeture n'a pas été atteinte.

15. outil selon l'une des revendications précédentes, **caractérisé en ce que** le tendeur (8,108) et l'extrémité libre (7) du câble (6,106) sont associés chacun à une gaine (9), lesdites gaines étant destinées à s'emmancher chacune sur un bras de l'outil.

16. Outil selon l'une des revendications précédentes, **caractérisé en ce qu'**il comprend des moyens de sélection de profils d'efforts appliqués par le tendeur (8,108) sur le câble (6,106), ledit dispositif comprenant des moyens de stockage d'informations dans lesquels sont enregistrés lesdits profils d'efforts.

## Claims

1. A tool provided with a device for helping with the actuating of said tool (2), the tool (2) including two arms (3, 4, 103a, 104a) movable in rotation about an axis (5, 105) from an open position, wherein the arms (3, 4, 103a, 104a) are distant from each other, to a closed position, wherein the arms (3, 4, 103a, 104a) are close to each other, with said device including a cable (6, 106), an end part (7) of which is associated with one of said arms (4, 104a), the other end part of said cable being placed in a cable tensioner (8, 108), with said tensioner (8, 108) being associated with the other arm (3), said device including the actuation means (10, 110) of the tensioner (8, 108) from an open position wherein the cable (6, 106) is relaxed, with the arms (3, 4, 103a, 104a) being in open position, to a closing position, wherein the cable (6, 106) is tight so as to switch the arms (3, 4, 103a, 104a) to the closed position thereof.

2. A tool according to claim 1, **characterized in that** the tensioner is a winder (8).

3. A tool according to claim 1, **characterized in that** the tensioner is composed of a screw-nut system (108).

4. A tool according to one of the preceding claims, **characterized in that** the actuation means (10, 110) of the tensioner (8, 108) are separated from the tool (2).

5. A tool according to claim 4, **characterized in that** the actuation means (10, 110) transmit the tensile stress to the tensioner (8, 108) through a flexible link (20).

6. A tool according to claim 5, **characterized in that** the flexible link (20) is integrated in an external protection sheath (24) which also includes at least one electric cable (26) connecting the actuation means (10, 110) to the rest of the help device.

7. A tool according to one of the preceding claims, **characterized in that** the actuation means (10, 110) of the tensioner (8, 108) are so arranged as to be triggered when the arms (3, 4, 103a, 104a) are actuated by a user.

8. A tool according to one of the preceding claims, **characterized in that** the actuation means (10, 110) include an electric motor (11).

9. A tool according to one of the preceding claims, **characterized in that** the cable (6, 106) and the tensioner (8, 108) are associated with the arms (3, 4, 103a, 104a) at an end part thereof.

10. A tool according to one of the preceding claims, **characterized in that** it includes a sensor (13) of the stress entailed in the actuation of the arms (3, 4, 103a, 104a) by a user, with said sensor being coupled to the actuation means (10, 110) so that the stress entailed in the tension of the cable (6, 106) is proportional to the stress entailed by the actuation of the arms (3, 4, 103a, 104a) by a user.

11. A tool according to claim 10, **characterized in that** the actuation means (10, 110) are so arranged as to actuate the tensioner (8, 108) when the stress detected by the stress sensor (13) is above a predetermined threshold.

12. A tool according to one of the preceding claims, **characterized in that** it includes means for adjusting the stress which the device is submitted to, to enable the switching from the open position to the closed position.

13. A tool according to one of the preceding claims, **characterized in that** it includes a tool duty cycle meter (2) with said meter being so arranged as to count the number of switches from the open position to the closed position and/or vice versa.

14. A tool according to one of the preceding claims, **characterized in that** the actuation means (10, 110) are so arranged as to drive the tensioner (8, 108) up to the closed position, when the switching from the open position to the closed position has been triggered and to prevent the switching back to the open position so long as the closed position has not been reached.

15. A tool according to one of the preceding claims, **characterized in that** the tensioner (8, 108) and the free end (7) of the cable (6, 106) are, each, associated with a sheath (9), said sheaths each being intended to engage onto one arm of the tool.

16. A tool according to one of the preceding claims, **characterized in that** it includes means for selecting the stress pattern applied by the tensioner (8, 108) to the cable (6, 106), said device including information storage means wherein said stress patterns are saved.

## Patentansprüche

1. Werkzeug mit einer Hilfsvorrichtung zur Betätigung des besagten Werkzeugs (2), wobei das Werkzeug (2) zwei in Drehung um eine Achse (5, 105) mobile Arme (3, 4, 103 a, 104 a) umfaßt, und zwar zwischen einer Öffnungsposition, in der die Arme (3, 4, 103 a, 104 a) voneinander entfernt sind, und einer Schließposition, in der die Arme (3, 4, 103 a, 104 a) einander angenähert sind, wobei die besagte Vorrichtung ein Kabel (6, 106) umfaßt, von dem ein Endabschnitt (7) einem der besagten Arme (4, 104 a) zugeordnet ist, und der andere Endabschnitt des besagten Kabels in einer Kabelspannvorrichtung (8, 108) angeordnet ist, wobei die besagte Spannvorrichtung (8, 108) dem anderen Arm (3) zugeordnet ist, wobei die besagte Vorrichtung Mittel zur Betätigung (10, 110) der Spannvorrichtung (8, 108) zwischen einer Öffnungsposition umfaßt, in der das Kabel (6, 106) entspannt ist und die Arme (3, 4, 103 a, 104 a) dabei in Öffnungsposition sind, und einer Schließposition, in der das Kabel (6, 106) gespannt ist, so daß die Arme (3, 4, 103 a, 104 a) in ihre Schließposition gebracht werden.

2. Werkzeug nach Anspruch 1, **dadurch gekennzeichnet, daß** die Spannvorrichtung ein Aufwickler (8) ist.

3. Werkzeug nach Anspruch 1, **dadurch gekennzeichnet, daß** die Spannvorrichtung aus einem Mechanismus mit Schraube und Schraubenmutter (108) gebildet wird.

4. Werkzeug nach einem beliebigen der vorstehenden Ansprüche, **dadurch gekennzeichnet, daß** die Mittel zur Betätigung (10, 110) der Spannvorrichtung (8, 108) vom Werkzeug (2) getrennt sind.

5. Werkzeug nach Anspruch 4, **dadurch gekennzeichnet, daß** die Mittel zur Betätigung (10, 110) die Spannkraft vermittels einer flexiblen Verbindung (20) an die Spannvorrichtung (8, 108) übertragen.

6. Werkzeug nach Anspruch 5, **dadurch gekennzeichnet, daß** die flexible Verbindung (20) in eine äußere Schutzhülle (24) integriert ist, die auch zumindest ein Stromkabel (26) umfaßt, das die Mittel zur Betätigung (10, 110) mit der übrigen Hilfsvorrichtung verbindet.

7. Werkzeug nach einem beliebigen der vorstehenden Ansprüche, **dadurch gekennzeichnet, daß** die Mittel zur Betätigung (10, 110) der Spannvorrichtung (8, 108) so gestaltet sind, daß sie auslösen, wenn die Arme (3, 4, 103 a, 104 a) von einem Benutzer betätigt werden.

8. Werkzeug nach einem beliebigen der vorstehenden Ansprüche, **dadurch gekennzeichnet, daß** die Mittel zur Betätigung (10, 110) einen elektrischen Motor (11) umfassen.

9. Werkzeug nach einem beliebigen der vorstehenden Ansprüche, **dadurch gekennzeichnet, daß** das Kabel (6, 106) und die Spannvorrichtung (8, 108) den Armen (3, 4, 103 a, 104 a) an einem derer Endabschnitte zugeordnet sind.

10. Werkzeug nach einem beliebigen der vorstehenden Ansprüche, **dadurch gekennzeichnet, daß** es einen Kraftaufnehmer (13) der Betätigung der Arme (3, 4, 103 a, 104 a) durch einen Benutzer umfaßt, wobei der besagte Aufnehmer so mit den Mitteln zur Betätigung (10, 110) gekoppelt ist, daß die Kraft zur Spannung des Kabels (6, 106) im Verhältnis zur Kraft für die Betätigung der Arme (3, 4, 103 a, 104 a) durch den Benutzer steht.

11. Werkzeug nach Anspruch 10, **dadurch gekennzeichnet, daß** die Mittel zur Betätigung (10, 110) so gestaltet sind, daß die Spannvorrichtung (8, 108) betätigt wird, wenn die vom Kraftaufnehmer (13) entdeckte Kraft grösser als ein vorher festgelegter Schwellenwert ist.

12. Werkzeug nach einem beliebigen der vorstehenden Ansprüche, **dadurch gekennzeichnet, daß** es Mittel zur Regelung der von der Vorrichtung aufgenommenen Kräfte umfaßt, um den Übergang von der Öffnungsposition zur Schließposition zu erlauben.

13. Werkzeug nach einem beliebigen der vorstehenden Ansprüche, **dadurch gekennzeichnet, daß** es einen Zähler der Benutzungszyklen des Werkzeugs (2) umfaßt, wobei der besagte Zähler so gestaltet ist, daß er die Anzahl Durchgänge von der Öffnungsposition zur Schließposition beziehungsweise umgekehrt zählt.

14. Werkzeug nach einem beliebigen der vorstehenden Ansprüche, **dadurch gekennzeichnet, daß** die Mittel zur Betätigung (10, 110) so gestaltet sind, daß sie die Spannvorrichtung (8, 108) bis zur Schließposition führen, wenn der Durchgang von der Öffnungsposition zur Schließposition ausgelöst wurde, und daß die Rückkehr zur Öffnungsposition verhindert wird, solange die Schließposition nicht erreicht wurde.

15. Werkzeug nach einem beliebigen der vorstehenden Ansprüche, **dadurch gekennzeichnet, daß** die Spannvorrichtung (8, 108) und das freie Ende (7) des Kabels (6, 106) jeweils einer Hülle (9) zugeordnet sind, wobei die besagten Hüllen dazu bestimmt sind, jeweils auf einen Arm des Werkzeugs aufgesteckt zu werden.

16. Werkzeug nach einem beliebigen der vorstehenden Ansprüche, **dadurch gekennzeichnet, daß** es Mittel zur Wahl von Kraftprofilen umfaßt, die von der Spannvorrichtung (8, 108) auf das Kabel (6, 106) aufgebracht werden, wobei die besagte Vorrichtung Mittel zum Speichern von Informationen umfaßt, in denen die besagten Kraftprofile aufgezeichnet werden.
